# EUROPEAN PATENT SPECIFICATION

(11) **EP 1 710 339 B1**
(45) Date of publication and mention of the grant of the patent: **22.06.2011**
(21) Application number: 06251271.0
(22) Date of filing: 09.03.2006
(51) Int. Cl.: D06F 25/00, D06F 58/24, D06F 37/26

(54) **Washing and drying machine**
Waschtrockner
Machine à laver séchante

(30) Priority: 06.04.2005 KR 2005028483
(43) Date of publication of application: 11.10.2006
(60) Divisional application: 10012471.8
(73) Proprietor: LG Electronics Inc., Seoul 150-010 (KR)
(72) Inventor: Lim, Hee Tae, Wonmi-ku Buchun-si Kyungki-do 420-757 (KR); Hong, Sang Wook, Keumchun-ku Seoul 153-031 (KR)
(74) Representative: TER MEER - STEINMEISTER & PARTNER GbR

(56) References cited:
- EP-A- 0 942 093
- DE-A1- 1 610 090
- DE-A1- 2 605 048
- PATENT ABSTRACTS OF JAPAN vol. 014, no. 559 (C-0787), 12 December 1990 (1990-12-12) -& JP 02 241486 A (HITACHI LTD), 26 September 1990 (1990-09-26)

## Description

The present invention relates to a washing and drying machine.

Generally, a washing machine is a machine that is capable of removing pollutants from clothes or bedclothes (hereinafter, referred to as "laundry") with detergent-dissolved water or pure water (hereinafter, referred to as "washing water"). Recently, a large number of washing machines have incorporated a drying unit for drying the laundry, and therefore, each such washing machine has a drying function.

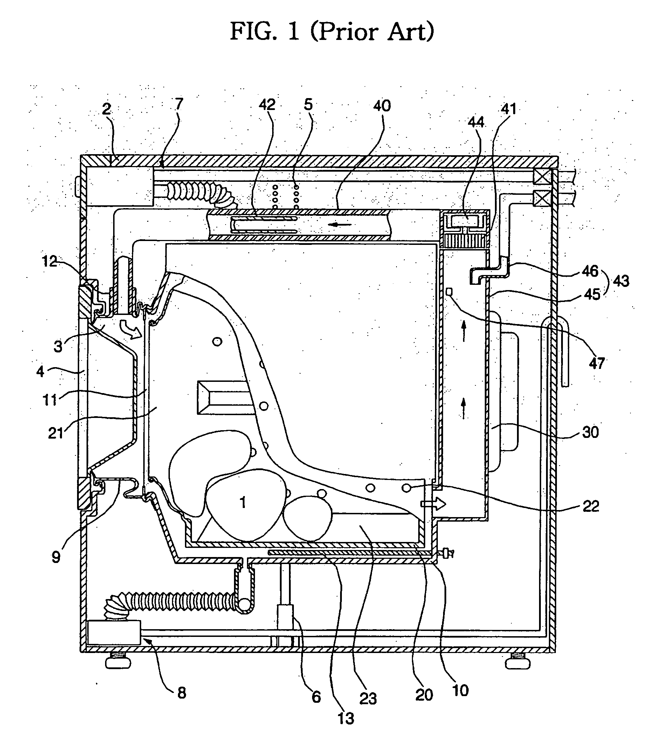

FIG. 1 is a longitudinal sectional view illustrating the interior of a conventional washing and drying machine.

As shown in FIG. 1, the conventional washing and drying machine comprises: a cabinet 2 forming the exterior of the washing machine; a tub 10 mounted in the cabinet 2 for receiving washing water; a drum 20 rotatably disposed in the tub 10 for receiving laundry 1; and a motor 30 for rotating the drum 20.

At the front surface of the cabinet 2 is formed a laundry inlet/outlet hole 3, through which the laundry 1 is put into the drum 20 and removed from the drum 20. The laundry inlet/outlet hole 3 has a door 4.

The tub 10 is mounted in the cabinet suspended by springs 5 connected between the upper end of the cabinet 2 and the tub 10. Also, the tub 10 is supported by a damper 6 disposed at the lower end of the cabinet 2 such that shock applied to the tub 10 is effectively damped by the damper 6.

To the tub 10 is connected a water supply unit 7 for supplying washing water into the tub 10 from the outside of the washing machine. To the tub 10 is also connected a drainage unit 8 for draining the washing water out of the tub 10.

At the center part of the front surface of the tub 10 is formed a tub access hole 11, through which the laundry 1 and air are introduced into or discharged from the tub 10. To the front surface of the tub 10 is attached a gasket 9, which comes into sealing contact with the door 4, when the door 4 is closed, for preventing the laundry 1, the washing water, and the air from leaking through a gap between the tub 10 and the door 4.

At the inner bottom surface of the tub 10 is mounted a washing heater 13 for heating the washing water such that the laundry can be washed with hot water. At the inner bottom surface of the tub 10 is also mounted a washing temperature sensor (not shown) for detecting the temperature of the washing water.

At the front surface of the drum 20 is formed a drum opening hole 21, through which the laundry 1 and air are introduced into or discharged from the drum 20. At the circumferential surface of the drum 20 are formed a plurality of through-holes 22, for the passage of which washing water and air to and from the drum 20.
To inner wall of the drum 20 are attached lifters 23, by which the laundry 1 is lifted and then falls.

The washing and drying machine further comprises: a drying duct 40, having a circulating fan 41 and a drying heater 42, for supplying hot air into the drum 20; and a condenser 43 for condensing wet air generated when the drum 20 is dried and guiding the condensed air to the drying duct 40.

In the drying duct 40 is mounted a fan motor 44 for rotating the circulating fan 41. The outlet end of the drying duct 40 is fixedly inserted into or fitted onto a drying duct connection member 12, which is formed at the gasket 9.

The condenser 43 comprises: a condensing duct 45 connected to the rear part of the tub 10 for allowing air to pass; and a cooling water supply unit 46 for supplying cooling water into the condensing duct 45 such that the air passing through the condensing duct 45 is cooled by the cooling water and thus subjected to a condensing process.

The inlet end of the condensing duct 45 is diagonally opposite to the outlet end of the drying duct 40 such that dry air introduced into the tub 10 from the drying duct 40 is uniformly circulated in the tub 10, and is then discharged into the condensing duct 45.

Specifically, the outlet end of the drying duct 40 is connected to the front upper part of the tub 10 while the inlet end of the condensing duct 45 is connected to the rear lower part of the tub 10.

In the condensing duct 45 is mounted a condenser temperature sensor 47 for detecting the temperature of air cooled by the cooling water.

When a user puts laundry 1 into the drum 20, closes the door 4 and operates the washing machine, washing water is introduced into the cabinet 2 through the water supply unit 7.

The introduced washing water is supplied into the tub 10, and is then introduced into the drum 20 through the drum opening hole 21 or the through-holes 22 such that the laundry 1 is wetted by the washing water.

As the motor 30 is operated, the drum 20 is rotated, and as a result, pollutants are separated from the laundry 1 by the washing water.

After the above-described washing process is completed, the dirty washing water is drained out of the tub 10 through the drainage unit 8. Subsequently, a rinsing process is performed several times.

After the rinsing processes are completed, a water removing or spinning process is performed to remove moisture from the laundry 1 by centrifugal force.

After the water removal process is completed, a drying process for drying the laundry 1 is performed. The drum 20 is rotated by the motor 30, and the circulating fan 41 and the drying heater 42 are turned on. Also, the cooling water is supplied into the condensing duct 45 through the cooling water supply unit 46.

As the circulating fan 41 is rotated, low-temperature and high-humidity air in the drum 20 is introduced into the condensing duct 45 through the through-holes 22 of the drum 20 and the tub 10.

At this time, the cooling water supplied through the cooling water supply unit 46 falls into the condensing duct 45, and the moisture in the air introduced into the condensing duct 45 is condensed by the cooling water. As a result, the air is dried.

After the air passes through the condensing duct 45, the air passes through the drying duct 40. At this time, the air is heated by the heater 42, and as a result, the air is changed into hot air. The hot air is blown to the front surface of the drum 20 through the outlet end of the drying duct 40.

The laundry 1 is dried in the drum 20 by the blown hot air, and as a result, the hot air is changed into low-temperature and high-humidity air, which flows into the condensing duct 45.

In the conventional washing and drying machine with the above-state construction, however, it is necessary that the condensing duct 45 be relatively long so as to sufficiently condense moisture contained in the air passing through the condensing duct 45. As a result, flow resistance is large, and the capacities of the tub 10 and the drum 20 are relatively reduced. Furthermore, a great amount of cooling water is consumed to cool the condensing duct 45. Therefore, the operating costs of the conventional washing and drying machine are increased.

Four prior art documents include DE-A-1610090, which discloses a washer dryer with an air-cooled condenser in the machine housing, DE-A-2605048, which discloses a washer-dryer adapted to reduce the proportion of cooling air to exhaust air, JP-A-2241486, which discloses a washer dryer having no special air-cooled heat exchanger and a simplified dryer mechanism, and EP-A-0942093 which discloses a washer dryer in which washing is dried by heated air being recirculated through it without escape to the outside.

The present invention is defined in the accompanying claims. Some features of embodiments are recited in the dependent claims.

Preferably, the air-cooling type condensing unit further includes: an introduction channel for guiding the outside air introduced through the inlet port into the tub; a condensing channel for performing heat exchange between the outside air introduced into the tub through the introduction channel and the inner circumferential surface of the tub to condense air used to dry the laundry; and a discharge channel for guiding the heat-exchanged air such that the air is discharged out of the cabinet through the outlet port.

Preferably, the air-cooling type condensing unit further includes: a condensing plate mounted in the condensing channel for facilitating heat exchange between the outside air and the inner circumferential surface of the tub.

Preferably, the condensing plate is spaced a predetermined distance from the inner circumferential surface of the tub such that the outside air can flow along the inner wall of the tub.

Preferably, the air-cooling type condensing unit further includes: a blowing fan mounted in the introduction channel.

In another arrangement, outside air exchanges heat with the circumferential surface of the tub to condense air used to dry the laundry. As a result, no cooling water is used to condense air used to dry the laundry. Consequently, there is an effect of reducing consumption of water, and therefore, decreasing the maintenance costs of the washing and drying machine.

In this case, no condensing duct is necessary. Consequently, flow resistance is decreased, and therefore, drying efficiency is improved. In addition, sufficient space is provided between the rear surface of the tub and the cabinet. Consequently, the volume of the drum is increased, and therefore, allowing increase of the washing/drying capacity of the washing and drying machine.

The above and other objects, features and other advantages of the present invention will be more clearly understood from the following detailed description taken in conjunction with the accompanying drawings, in which:
FIG. 1 is a longitudinal sectional view illustrating a conventional washing and drying machine;
FIG. 2 is an exploded perspective view illustrating a washing and drying machine according to a first embodiment of the present invention;
FIG. 3 is a perspective view illustrating a tub of the washing and drying machine according to the first embodiment of the present invention;
FIG. 4 is a cross-sectional view of the washing and drying machine according to the first embodiment of the present invention;
FIG. 5 is a cross-sectional view illustrating a washing and drying machine according to a second embodiment not being part of the present invention; and
FIG. 6 is a cross-sectional view illustrating a washing and drying machine according to a third embodiment not being part of the present invention.

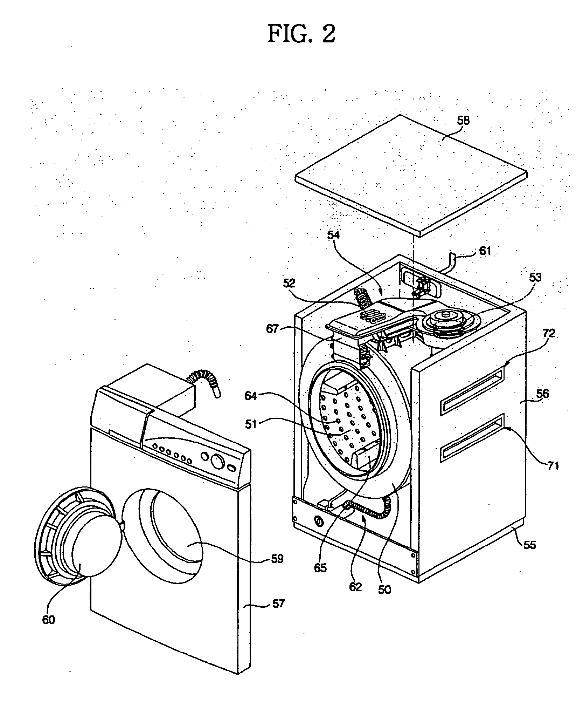

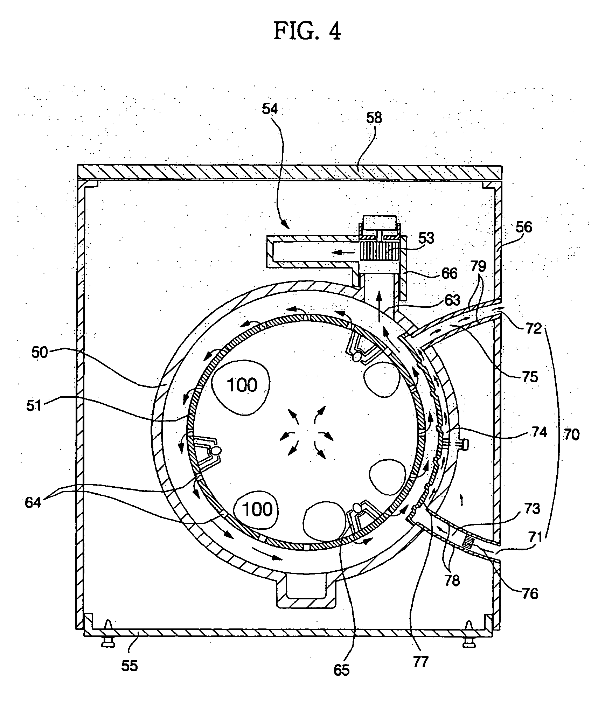

As shown in FIGS. 2 to 4, the washing and drying machine according to the first embodiment includes: a tub 50 provided in a cabinet in a suspended manner; a drum 51 rotatably disposed inside the tub 50; a drying duct 54, having a drying heater 52 and a circulating fan 53, for supplying hot air into the drum 51 to dry laundry 100; and an air-cooling type condensing unit 70 for performing heat exchange between air introduced from the outside of the cabinet and the circumferential surface of the tub 50 to condense air used to dry the laundry 100 in the drum 51.

The cabinet includes: a base pan 55; a cabinet body 56 mounted on the base pan 55; a cabinet cover 57 disposed in the front of the cabinet body 56; and a top plate 58 mounted on the cabinet body 56 and the cabinet cover 57.

At the cabinet cover 57 is formed a laundry access hole 59, through which the laundry 100 is placed into or removed from the drum 51. To the cabinet cover 57 is also pivotably attached a door 60 opening and closing the laundry access hole 59.

To the tub 50 is connected a water supply unit 61 for supplying washing water into the tub 50 from the outside of the washing machine. To the tub 50 is also connected a drainage unit 62 for draining the washing water out of the tub 50.

At the center portion of the front surface of the tub 50 is formed a tub opening hole, through which the laundry 100 and air are introduced into or discharged from the tub 50. To the front surface of the tub 50 is attached a gasket (not shown), which comes into tight sealing contact with the door 60, when the door 60 is closed, for preventing the laundry 100, the washing water, and the air from being discharged from the gap between the tub 50 and the door 60.

At the upper part of the circumferential surface of the tub 50 is formed a duct communication port 63, to which the drying duct 54 is connected.

At the front surface of the drum 51 is formed a drum opening hole, through which the laundry 100 and air are introduced into or discharged from the drum 51. At the circumferential surface and the rear surface of the drum 51 are formed a plurality of through-holes 64, through which washing water and air are introduced into or discharged from the drum 51.

To the inner wall of the drum 51 are attached lifters 65, by which the laundry 100 is agitated as the drum rotates.

The drying duct 54 includes: an introduction portion 66 for introducing air used to dry the laundry 100 in the drum 51; and a discharge portion 67 for heating the air introduced through the introduction portion 66 and discharging the heated air into the drum 51.

The introduction portion 66 is connected to the duct communication port 63. The discharge portion 67 is directly connected to the front surface of the tub 50 in the present embodiment. Alternatively, the discharge portion 67 may be connected to the gasket (not shown).

The air-cooling type condensing unit 70 includes: an inlet port 71 formed at one side of the cabinet body 56 for allowing outside air to be introduced into the cabinet therethrough; and an outlet port 72 formed at the other side of the cabinet body 56 for allowing the spent air, which has exchanged heat with the circumferential surface of the tub 50, to be discharged out of the cabinet therethrough.

In the following description of the present embodiment, the inlet port 71 and the outlet port 72 are formed at the right or left side surface of the cabinet body 56 such that the inlet port 71 and the outlet port 72 are vertically spaced a predetermined distance from each other. Alternatively, the inlet port 71 and the outlet port 72 may be spaced from each other in an alternative configuration, such as, for example, the inlet port 71 and outlet port 72 may be horizontally as well as vertically spaced from each other.

The air-cooling type condensing unit 70 further includes: an introduction channel 73 for guiding the outside air introduced through the inlet port 71 into the tub 50; a condensing channel 74 for performing heat exchange between the outside air introduced into the tub 50 through the introduction channel 73 and the inner circumferential surface of the tub 50 to condense air used to dry the laundry 100; and a discharge channel 75 for guiding the heat-exchanged air such that the air is discharged out of the cabinet body 56 through the outlet port 72.

The introduction channel 73 is formed by a first channel guide 78 connected between the inlet port 71 and the circumferential surface of the tub 50, and the outlet channel 75 is formed by a second channel guide 79 connected between the outlet port 72 and the circumferential surface of the tub 50.

In the condensing channel 74 is mounted a condensing plate 77 for facilitating heat exchange between the outside air and the inner circumferential surface of the tub 50.

Preferably, the condensing plate 77 is spaced a predetermined distance from the inner circumferential surface of the tub 50 such that the outside air introduced into the tub 50 through the introduction channel 73 can flow along the inner wall of the tub 50.

As will be appreciated from the above, the condensing channel 74 is defined by the condensing plate 77 and the inner circumferential surface of the tub 50.

The condensing plate 77 may be curved. Further, the condensing plate 77 may be curved such that the radius of curvature of condensing plate 77 has a radius centred on the axis of the tub, such that it has a radius of curvature conforming to that of the inner wall of the tub 50 to define the channel 74.

The condensing plate 77 may be made of a suitable material such as, for example, metal having high thermal conductivity. Additionally, the condensing plate may be embossed to increase its surface area..

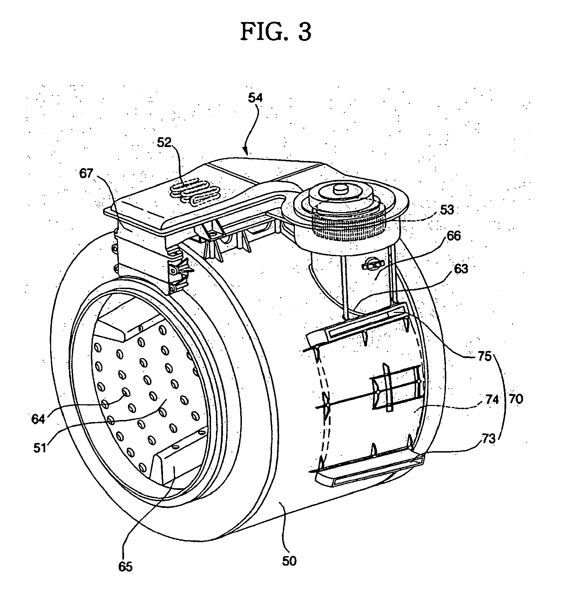

The condensing channel 74 is provided below the duct communication port 63. As shown in FIG. 3, the condensing channel 74 has a predetermined width extending between the rear side of the tub 50 and the front side of the tub 50 adjacent the duct communication port 63.

In the introduction channel 73 are mounted a blowing fan 76 and a motor (not shown), by which air flow is increased, and efficiency of heat exchange is improved through forced convection.

In the drying process for drying the laundry 100, the drum 51 is rotated, and the circulating fan 53, the drying heater 52, and the blowing fan 76 are turned on.

As the drum 51 is rotated, the laundry 100 is shaken and tossed in the drum 51. At this time air in the drum 51 flows toward the through-holes 64 of the drum 51 by a blowing force generated when the circulating fan 53 is turning.

The air flowing toward the through-holes 64 of the drum 51 comes into contact with the laundry 100. As a result, the laundry 100 is dried, and the air is changed into low-temperature and high-humidity air. The low-temperature and high-humidity air flows between the drum 51 and the tub 50 through the through-holes 64 of the drum 51.

The low-temperature and high-humidity air, i.e., the wet air, between the drum 51 and the tub 50 flows adjacent the condensing channel 74. As a result, heat of the wet air is transmitted to the condensing plate 77.

At this time, outside air introduced through the inlet port 71 is guided into the condensing channel 74 through the introduction channel 73. The outside air guided into the condensing channel 73 absorbs heat from the condensing plate 77 and the inner wall of the tub 50, and is then discharged out of the cabinet body 56 through the outlet channel 65 and the outlet port 72.

Specifically, the outside air introduced through the inlet port 71 exchanges heat with the condensing plate 77 and the inner wall of the tub 50 to cool the condensing plate 77 and the inner wall of the tub 50, and the heat of the wet air is transmitted to the condensing plate 77. As a result, moisture contained in the wet air is condensed on the condensing plate 77, and therefore, the wet air is changed into low-humidity air.

The low-humidity air is introduced into the drying duct 54 through the introduction part 66 of the drying duct 54, and is then heated by the drying heater 52. As a result, the low-humidity air is changed into hot air.

The hot air is discharged into the tub 50 through the discharge part 67 of the drying duct 54 to dry the laundry 100 in the drum 51. The above-described procedure is repetitively carried out to continuously dry the laundry 100.

Meanwhile, the water condensed on the surface of the condensing plate 77 falls along the condensing plate 77, and is then drained out of the cabinet through the drainage unit 62.

As can be easily understood from the above description, outside air is used to condense moisture out of air used to dry the laundry 100. As a result, no cooling water is used to condense air used to dry the laundry 100. Consequently, consumption of water is reduced.

Furthermore, no condensing duct is necessary. Consequently, air flow resistance is decreased. In addition, the structure of the channels, through which the outside air is introduced and discharged, is simple in this embodiment, and therefore, sufficient space is provided between the rear surface of the tub 50 and the cabinet body 56.

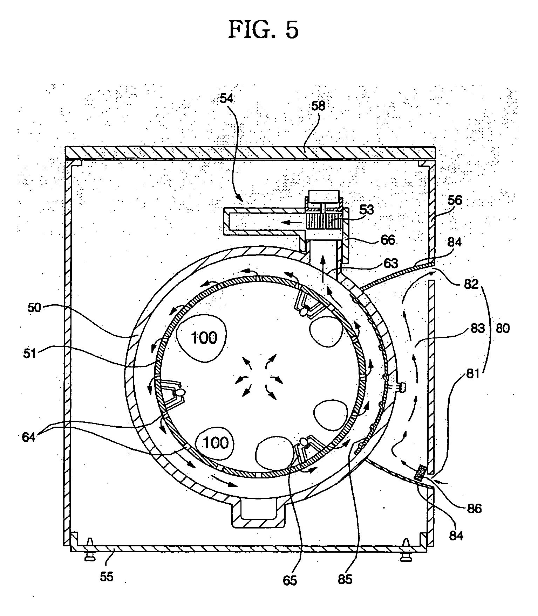

FIG. 5 is a cross-sectional view illustrating a washing and drying machine according to a second embodiment.

The washing and drying machine according to the second embodiment includes an air-cooling type condensing unit 80. As shown in FIG. 5, the air-cooling type condensing unit 80 includes: an inlet port 81 formed at one side of the cabinet body 56 for allowing outside air to be introduced into the cabinet; an outlet port 82 formed at the other side of the cabinet body 56 for allowing the outside air, which has exchanged heat with the circumferential surface of the tub 50, to be discharged out of the cabinet therethrough; and a condensing channel 83 defined by the inside surface of the cabinet body 56 and the outer circumferential surface of the tub 50 for allowing the outside air introduced through the inlet port 81 to flow between the outer circumferential surface of the tub 50 and the inside surface of the cabinet body 56 and then guiding the air such that the air is discharged out of the cabinet body 56 through the outlet port 82.

Between the outer circumferential surface of the tub 50 and the inside surface of the cabinet body 56 is connected a third channel guide 84 for directing the outside air such that the outside air makes partial contact with the outer circumferential surface of the tub 50. The condensing channel 83 is defined by the outer circumferential surface of the tub 50, the cabinet body 56, and the third channel guide 84.

Other components of the washing and drying machine according to this second embodiment are identical in construction and operation to those of the washing and drying machine according to the first embodiment. Therefore, the components of the washing and drying machine according to the second embodiment, which are the same as those of the washing and drying machine according to the first embodiment, are indicated by the same reference numerals as those of the washing and drying machine according to the first embodiment, and further detailed description thereof will not be given.

At the inner or outer circumferential surface of the tub 50 may be mounted a condensing plate 85 for facilitating heat exchange between the outside air and the inner or outer circumferential surface of the tub 50. In the illustrated embodiment, the condensing plate 85 is tightly attached to the inner circumferential surface of the tub 50.

Also, a blowing fan 86 is mounted at the inlet port 81 such that the blowing fan 86 is perpendicular to the flow direction of the outside air.

In the washing and drying machine according to this second embodiment, the channel is constructed such that the outside air does not flow into the inside of the tub 50, i.e., the outside air flows between the outer circumferential surface of the tub 50 and the inner wall of the cabinet. Consequently, the construction of the channel is simplified.

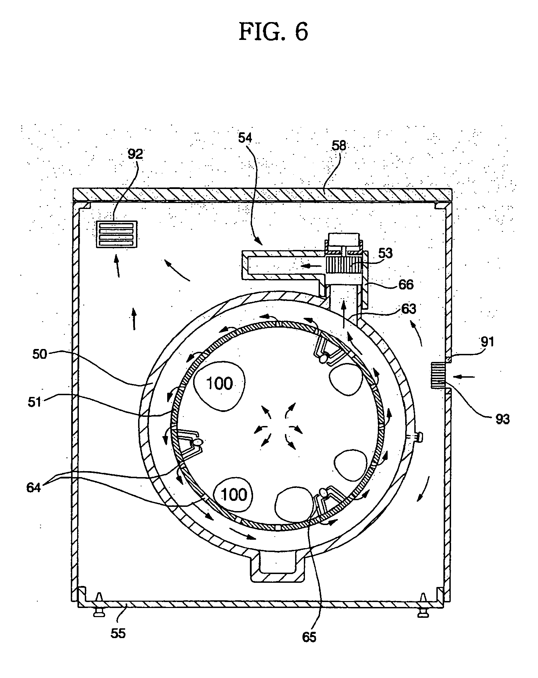

FIG. 6 is a cross-sectional view illustrating a washing and drying machine according to a third embodiment.

The washing and drying machine according to the third embodiment includes an air-cooling type condensing unit. As shown in FIG. 6, the air-cooling type condensing unit includes: an inlet port 91 formed at one side of the cabinet body 56 for allowing outside air to be introduced into the cabinet therethrough; and an outlet port 92 formed at the other side of the cabinet body 56 for allowing the outside air, which has exchanged heat with the circumferential surface of the tub 50, to be discharged out of the cabinet therethrough.

In the illustrated embodiment, the inlet port 91 is formed on the right or left side surface of the cabinet body 56, and the outlet port 92 is formed on the rear surface of the cabinet body 56. Alternatively, the inlet port 91 may be formed on another surface of the cabinet body 56 such as the rear, top or front surface; and the outlet port 92 may be formed on a side, top or front surface.

The washing and drying machine according to the third embodiment is the same in construction and operation as the washing and drying machine according to the first embodiment except that the outside air introduced through the inlet port 91 exchanges heat with the entire outer circumferential surface of the tub 50, while passing through the cabinet, to condense moisture out of air used to dry the laundry 100. Therefore, other components of the washing and drying machine according to the third embodiment, which are the same in construction and operation to those of the washing and drying machine according to the first embodiment, are indicated by the same reference numerals as those of the washing and drying machine according to the first embodiment, and further detailed description thereof will not be given.

At the inlet port 91 is mounted a blowing fan 93 for increasing air flow and cooling the outer circumferential surface of the tub 50 through forced convection.

Another blowing fan may be mounted at the outlet port 92. In the illustrated embodiment, however, the blowing fan 93 is mounted only at the inlet port 91.

As apparent from the above description, embodiments of the washing and drying machine have the following effects.

The outside air exchanges heat with the circumferential surface of the tub to condense moisture out of air used to dry the laundry. As a result, no cooling water is used in the condensing process used to dry the laundry. Consequently, the present invention has the effect of reducing consumption of water, and therefore, decreasing the operating costs of the washing and drying machine.

Furthermore, no condensing duct is necessary. Consequently, flow resistance is decreased, and therefore, drying efficiency is improved. In addition, sufficient space is provided between the rear surface of the tub and the cabinet. Consequently, the present invention has the effect of increasing the volume of the drum, and therefore, increasing the washing/drying capacity of the washing and drying machine.

Although the present invention has been described with reference to one exemplary embodiment, it is understood that the words that have been used are words of description and illustration, rather than words of limitation. The invention is restricted to the features of the embodiments as defined in the appended claims.

## Claims

1. A washing and drying machine comprising:
a tub (50) mounted in a cabinet (56);
a drum (51) rotatably provided inside said tub (50);
a drying duct (54), having a drying heater (52) and a circulating fan (53), said drying duct (54) supplying hot air into said drum (51) to dry laundry;
an air-cooling condensing unit (70) that performs heat exchange between air introduced from the outside of the cabinet (56) and at least a part of said tub (50) to dry air used to dry the laundry in said drum (51); said condensing unit comprising an inlet port (71) allowing outside air to be introduced into the cabinet (56); and
an outlet port (72) allowing the outside air, which has passed the tub (50) to be discharged out of the cabinet (56);
**characterized in that** the air-cooling condensing unit (70) further comprises;
an introduction channel (73) that guides the outside air introduced through said inlet port (71) into said tub;
a condensing channel (74) for performing heat exchange between the outside air introduced into said tub (50) through said introduction channel (73) and the inner circumferential surface of said tub (50) to dry air used to dry the laundry; and
a discharge channel (75) that guides the heat-exchanged air such that it is discharged out of the cabinet (56) through said outlet port (72).

2. The machine as set forth in claim 1, wherein said inlet port (71) and said outlet port (72) are provided on one side of the cabinet (56) such that said inlet port (71) and said outlet port (72) are vertically spaced a predetermined distance from each other.

3. The machine as set forth in any of claims 1 or 2, wherein said air-cooling condensing unit (70) further comprises:
a condensing plate (77) mounted in the path of the outside air to facilitate heat exchange between the outside air and the at least part of said tub (50).

4. The machine as set forth in claim 3, wherein the condensing plate (77) is mounted in the condensing channel (74).

5. The machine as set forth in claim 4, wherein said condensing plate (77) is spaced from the inner circumferential surface of said tub (50) such that the outside air can flow along the inner wall of said tub (50).

6. The machine as set forth in any of claims 3, 4 or 5, wherein said condensing plate (77) is made of metal.

7. The machine as set forth in any of claims 3, 4, 5 or 6, wherein said condensing plate (77) is embossed.

8. The machine as set forth in any of claims 2, 4 or 5, wherein said air-cooling condensing unit (70) further comprises:
a blowing fan (76) mounted at said inlet port or in said introduction channel (73).

9. The machine as set forth in any of claims 5 to 8, further comprising:
a duct communication port (63) formed at the circumferential surface of said tub (50) such that the inlet end of said drying duct (54) is connected to said duct communication port (63), wherein
said condensing channel (74) is provided below said duct communication port (63).

10. The machine as set forth in claim 9, wherein said air-cooling condensing unit (70) further comprises:
a condensing plate mounted at the circumferential surface of said tub (50) to facilitate heat exchange between the outside air and the circumferential surface of said tub (50).

## Patentansprüche

1. Wasch- und Trocknungsmaschine, umfassend:
einen Bottich (50), der in einem Gehäuse (56) montiert ist;
eine Trommel (51), die in dem Bottich (50) drehbar vorgesehen ist;
eine Trocknungsrohrleitung (54), die eine Trocknungsheizeinrichtung (52) und ein Zirkulationsgebläse (53) besitzt, wobei die Trocknungsrohrleitung (54) der Trommel (51) heiße Luft zuführt, um Wäsche zu trocknen;
eine Luftkühlungs-Kondensationseinheit (70), die einen Wärmeaustausch zwischen Luft, die von außerhalb des Gehäuses (56) eingeleitet wird, und wenigstens einem Teil des Bottichs (50) ausführt, um Luft zu trocknen, die verwendet wird, um die Wäsche in der Trommel (51) zu trocknen; wobei die Kondensationseinheit umfasst:
einen Einlassanschluss (71), der ermöglicht, dass Außenluft in das Gehäuse (56) eingeleitet wird; und
einen Auslassanschluss (72), der ermöglicht, dass Außenluft, die sich durch den Bottich (50) bewegt hat, aus dem Gehäuse (56) ausgegeben wird;
**dadurch gekennzeichnet, dass** die Luftkühlungs-Kondensationseinheit (70) ferner umfasst:
einen Einleitungskanal (73), der die durch den Einlassanschluss (71) eingeleitete Außenluft dem Bottich zuführt;
einen Kondensationskanal (74), um einen Wärmeaustausch zwischen der Außenluft, die durch den Einleitungskanal (73) in den Bottich (50) eingeleitet wird, und der inneren Umfangsoberfläche des Bottichs (50) auszuführen, um die Luft zu trocknen, die zum Trocknen der Wäsche verwendet wird; und
einen Ausgabekanal (75), der die einem Wärmeaustausch unterzogene Luft führt, so dass sie durch den Auslasskanal (72) aus dem Gehäuse (56) ausgegeben wird.

2. Maschine nach Anspruch 1, wobei der Einlassanschluss (71) und der Auslassanschluss (72) auf einer Seite des Gehäuses (56) vorgesehen sind, so dass der Einlassanschluss (71) und der Auslassanschluss (72) vertikal um eine vorgegebene Strecke voneinander beabstandet sind.

3. Maschine nach einem der Ansprüche 1 oder 2, wobei die Luftkühlungs-Kondensationseinheit (70) ferner umfasst:
eine Kondensationsplatte (77), die im Weg der Außenluft montiert ist, um den Wärmeaustausch zwischen der Außenluft und wenigstens dem Teil des Bottichs (50) zu erleichtern.

4. Maschine nach Anspruch 3, wobei die Kondensationsplatte (77) in dem Kondensationskanal (74) montiert ist.

5. Maschine nach Anspruch 4, wobei die Kondensationsplatte (77) von der inneren Umfangsoberfläche des Bottichs (50) beabstandet ist, so dass die Außenluft längs der Innenwand des Bottichs (50) strömen kann.

6. Maschine nach einem der Ansprüche 3, 4 oder 5, wobei die Kondensationsplatte (77) aus Metall hergestellt ist.

7. Maschine nach einem der Ansprüche 3, 4, 5 oder 6, wobei die Kondensationsplatte (77) geprägt ist.

8. Maschine nach einem der Ansprüche 2, 4 oder 5, wobei die Luftkühlungs-Kondensationseinheit (70) ferner umfasst:
ein Gebläse (76), das am Einlassanschluss oder in dem Einleitungskanal (73) montiert ist.

9. Maschine nach einem der Ansprüche 5 oder 8 die ferner umfasst:
einen Rohrleitungs-Kommunikationsanschluss (63), der an der Umfangsoberfläche des Bottichs (50) ausgebildet ist, so dass das Einlassende der Trocknungsrohrleitung (54) mit dem Rohrleitungs-Kommunikationsanschluss (63) verbunden ist, wobei
der Kondensationskanal (74) unter dem Rohrleitungs-Kommunikationskanal (63) vorgesehen ist.

10. Maschine nach Anspruch 9, wobei die Luftkühlungs-Kondensationseinheit (70) ferner umfasst:
eine Kondensationsplatte, die an der Umfangsoberfläche des Bottichs (50) montiert ist, um den Wärmeaustausch zwischen der Außenluft und der Umfangsoberfläche des Bottichs (50) zu erleichtern.

## Revendications

1. Machine à laver séchante comprenant :
une cuve (50) montée dans une carrosserie (56) ;
un tambour (51) prévu de manière rotative à l'intérieur de ladite cuve (50) ;
un conduit séchant (54) présentant un chauffage séchant (52) et un ventilateur circulant (53), ledit conduit séchant (54) fournissant de l'air chaud dans ledit tambour (51) pour sécher le linge ;
une unité de condensation à refroidissement par air (70) qui effectue l'échange de chaleur entre l'air introduit depuis l'extérieur de la carrosserie (56) et au moins une partie de ladite cuve (50) pour sécher l'air utilisé pour sécher le linge dans ledit tambour (51) ; ladite unité de condensation comprenant un port d'entrée (71) permettant à l'air extérieur d'être introduit dans la carrosserie (56) ; et
un port de sortie (72) permettant à l'air extérieur qui est passé par la cuve (50) d'être déchargé hors de la carrosserie (56) ;
**caractérisée en ce que** l'unité de condensation à refroidissement par air (70) comprend en outre ;
un canal d'introduction (73) qui guide l'air extérieur introduit à travers ledit port d'entrée (71) dans ladite cuve ;
un canal de condensation (74) pour effectuer un échange de chaleur entre l'air extérieur introduit dans ladite cuve (50) par ledit canal d'introduction (73) et la surface circonférentielle intérieure de ladite cuve (50) pour sécher l'air utilisé pour sécher le linge ; et
un canal de décharge (75) qui guide l'air échangé par la chaleur de façon à ce qu'il soit déchargé hors de la carrosserie (56) à travers ledit port de sortie (72).

2. Machine selon la revendication 1, dans laquelle ledit port d'entrée (71) et ledit port de sortie (72) sont prévus sur un côté de la carrosserie (56) de telle manière que ledit port d'entrée (71) et ledit port de sortie (72) soient espacés verticalement à une distance prédéterminée l'un de l'autre.

3. Machine selon la revendication 1 ou 2, dans laquelle ladite unité de condensation à refroidissement par air (70) comprend en outre :
une plaque de condensation (77) montée dans le trajet de l'air extérieur pour faciliter l'échange de chaleur entre l'air extérieur et l'au moins partie de ladite cuve (50).

4. Machine selon la revendication 3, dans laquelle la plaque de condensation (77) est montée dans le canal de condensation (74).

5. Machine selon la revendication 4, dans laquelle ladite plaque de condensation (77) est espacée de la surface circonférentielle intérieure de ladite cuve (50) de telle manière que l'air extérieur puisse circuler le long de la paroi intérieure de ladite cuve (50).

6. Machine selon l'une quelconque des revendications 3, 4 ou 5, dans laquelle ladite plaque de condensation (77) est réalisée en métal.

7. Machine selon l'une quelconque des revendications 3, 4 ou 5, dans laquelle ladite plaque de condensation (77) est estampée.

8. Machine selon l'une quelconque des revendications 3, 4 ou 5, dans laquelle ladite unité de condensation à refroidissement par air (70) comprend en outre :
une soufflante (76) montée sur ledit port d'entrée ou dans ledit canal d'introduction (73).

9. Machine selon l'une quelconque des revendications 5 à 8, comprenant en outre :
un port de communication de conduit (63) formé sur la surface circonférentielle de ladite cuve (50) de telle manière que l'extrémité d'entrée dudit conduit séchant (54) soit connectée audit port de communication de conduit (63), dans lequel
ledit canal de condensation (74) est prévu en-dessous dudit port de communication de conduit (63).

10. Machine selon la revendication 9, dans laquelle ladite unité de condensation à refroidissement par air (70) comprend en outre :
une plaque de condensation montée sur la surface circonférentielle de ladite cuve (50) pour faciliter l'échange de chaleur entre l'air extérieur et la surface circonférentielle de ladite cuve (50).
